# EUROPEAN PATENT APPLICATION

(11) **EP 4 428 086 A1**
(43) Date of publication of application: **11.09.2024**
(21) Application number: 23160192.3
(22) Date of filing: 06.03.2023
(51) Int. Cl.: B66C 13/00

(54) **MOVABLE PLATFORM FOR INSPECTION AND CONDITION MONITORING OF A HIGH-VOLTAGE VALVE HALL**

(71) Applicant: Hitachi Energy Ltd, 8050 Zürich (CH)
(72) Inventor: COTTET, Didier, 8050 Zürich (CH); SCHUDERER, Juergen, 8047 Zürich (CH); CHEN, Nan, 722 10 Västerås (SE); LUVISOTTO, Michele, 722 19 Västerås (SE); FAIRBROTHER, Andrew, 8307 Effretikon (CH)
(74) Representative: Epping - Hermann - Fischer

(57) **Abstract**

Inspection and condition monitoring system (1), comprising an industrial hall (100), delimited by at least a wall (101), a ceiling (102) and a floor (103), enclosing a space (104) containing equipment (105). The system (1) furthermore comprises a drive train (11) which is located at a safe position below the ceiling (102) of the industrial hall (100), a crane trolley (12) which is moved by the drive train (11), a crane bridge (13) which supports the crane trolley (12), crane runway rails (14) adapted to support the crane bridge (13), both forming a first rail system (17) such that the crane trolley (12) can move inside the industrial hall (100). The system (1) further comprises at least one sensor box (20).

## Description

The present disclosure relates to an inspection and condition monitoring system. The present disclosure further relates to a method for inspecting and condition monitoring of equipment in an industrial hall.

A valve hall is a building which contains the valves of the converters of a high-voltage direct current (HVDC) plant. The valves can be of voltage source converter (VSC) type or line commutated converter (LCC) type. Voltage source converters (VSC) consist of insulated gate bipolar transistors (IGBT) and line commutated converters (LCC) consist of thyristors. The voltage source converters may either be supported by insulators in a standing position or hung from the ceiling of the valve hall. The latter requires a stronger ceiling structure or a dedicated truss structure, however the hall and the converters can better survive earthquakes compared to valve structures standing on the floor.

A valve hall is equipped with heating and cooling equipment to control the temperature of power semiconductors. This includes thyristors, IGBTs and also potentially future types such as silicon carbide MOSFETs, etc. The control of the temperature is required not only for the power semiconductors, but also for all control and communication electronics in the valves and other auxiliary equipment in the valve hall. The valve hall also protects the valves from weather and pollution. Several valve assemblies, connected in series for the required terminal voltage, may be installed in the valve hall building.

High voltage bushings are supported through the walls of the valve hall, to allow connections between the AC switchyard with grid transformers on the one side and the DC switchyard on the other. There is often an additional building beside the valve hall, which contains control electronics, equipment for valve cooling and valve monitoring, station service power distribution, and amenities for the plant workers.

Because very high voltages are present while the converters are in operation, access to the valve halls is limited. The auxiliary control building may have windows to observe the valve hall, but these are normally not provided. Usually the converter is monitored by CCTV cameras for visual supervision. To protect communication systems from electromagnetic interference, valve hall buildings must have shielding installed to control emission of radio-frequency energy.

Inspection and condition monitoring tools are expected to play an increasingly crucial role in optimizing and predicting the maintenance of HVDC converters.

Inspection during commissioning or maintenance is mostly a manual process, requiring hundreds of man-hours for a converter.

The ease of installing inspection and condition monitoring systems and their independent operation are of great importance to reduce the risk of adding equipment into a sensitive building, like an industrial hall.

The utility model CN210242988U discloses an infrared camera for a valve hall of a converter station. The infrared camera is attached to a track, which is mounted to the ceiling of the valve hall.

It is an object to avoid human interference inside an industrial hall while still increasing the quality of inspection and health monitoring of equipment and the environment in an industrial hall.

This object is solved by the features of the independent claims. Advantageous embodiments are indicated in the dependent claims.

Therefore, an inspection and health monitoring system inside an industrial hall, e.g. a valve hall, is provided. Furthermore a corresponding method of inspecting and health monitoring of equipment and/or the environment inside an industrial hall, for example in a valve hall, is provided. The industrial hall is delimited at least by a wall, a ceiling and a floor, enclosing a space containing equipment.

The industrial hall is for example a valve hall, a cold storage warehouse, a foundry, a nuclear power plant, a cleanroom, an indoor substation, e.g. with gas insulated switchgear (GIS), or another facility with sensitive equipment and environment that needs monitoring.

The system further comprises a drive train, which is located at a safe position below the ceiling of the industrial hall.

The drive train is located at a safe position so that it is not affected by other equipment, electric fields or even electromagnetic interference. HVDC converters, for example, operate at voltages up to 1100 kV, hence clearance and creepage distances of up to several meters are necessary because of the high electric fields, i.e. both DC-fields and AC-fields. The system is not limited to HVDC converters, which operate at voltages up to 1100 kV. Higher voltages are also possible.

Furthermore the system comprises a crane trolley, which is moved by the drive train, and a crane bridge, which supports the crane trolley.

The crane trolley is also located at a safe position so that it is not affected by other equipment, electric fields or even electromagnetic interference.

The system further comprises crane runway rails, adapted to support the crane bridge. Both the crane runway rails and the crane bridge form a first rail system, such that the crane trolley can move inside the industrial hall.

The system further comprises at least one sensor box.

The sensor box is attached to movable parts of the system and thus is movable inside the industrial hall.

The system is easy to install, as it can be implemented onto a pre-existing infrastructure, which is a permanent installation, like a crane system used for valve installation. Other mobile platforms, like a rod structure, are also possible and the system is not limited to a crane system or a rod structure. The system can also be a temporary installation, for example a smaller overhead system could be installed for the sensor box, so that it can be used during converter maintenance or operation.

The use of this inspection and health monitoring system has the advantage over unmanned ground vehicles, like robots, that the monitored area is larger. It is not limited to the floor. The advantage over unmanned aerial vehicles, like drones, is that a system using components of, for example, a crane system has a less restricted weight limit, which is associated with a limitation of the number and type of sensors used.

Furthermore, robots and drones are typically used for scheduled inspections, and not for routine or continuous monitoring. For these inspections an operator is present, e.g. there is no or limited automation in the inspections performed with these technologies.

Stationary wall or equipment mounted sensors either allow only for long-distance image sensing with limited resolution and line-of-sight or require a large number of sensors at critical installation locations.

A movable sensor box allows for a better quality of inspection and health monitoring of the equipment and environment in an industrial hall. The sensor box reduces the need for a number of inspection and condition monitoring devices and also enables an automated inspection and monitoring system.

The at least one sensor box is mounted to the crane trolley traveling along the crane bridge. Thus, the movement of the sensor box along the crane bridge and the crane runway rails enables a larger space inside the industrial hall to be scanned, even if it is not accessible on the ground.

Furthermore the system comprises a crane hook block, which is linked to the crane trolley and which is adapted to move up and down in the industrial hall, wherein the at least one sensor box is mounted to the crane hook block.

This enables a movement of the sensor box in three dimensions, which therefore enables an even larger space inside the industrial hall to be scanned. This results in a more detailed scan of the equipment and environment of the industrial hall.

The system furthermore comprises a crane hook, which is linked to the crane hook block, wherein the at least one sensor box is attached to the crane hook. Using the crane hook as a mobile platform for the sensor box enables an on-demand scanning in three dimensions. This results in an ad-hoc scan if requested. In this case a position calibration procedure is needed when mounting the sensor box.

Locating the drive train at a safe position at the wall of the industrial hall is advantageous if the space inside the industrial hall offers too little space for the sensor box or if the space is not accessible due to a hazardous environment or sensitive equipment. Thus, the drive train is limited to the area next to the wall. With this the sensor box is adapted to move in a two-dimensional space in a vertical plane at the wall of the industrial hall. For this purpose, for example, the crane bridge of a crane system is parked at the wall. Even if it is limited to this wall area, the advantage is that less sensors are needed to cover a larger area to be monitored.

For this case an alternative structure can also be used to move the sensor box inside the industrial hall. For example, the system comprises a rod structure with a rod. The rod comprises a bottom end and a top end and extends from the floor of the industrial hall to the ceiling of the industrial hall. The rod structure further comprises a mechanical channel positioned on the floor of the industrial hall, forming a second rail system, such that the mechanical channel guides the rod on its bottom end with wheels. At the top end the rod is moved by, for example, the drive train. A different propulsion, like a mechanical drive, for example a gear drive, is also possible. The at least one sensor box is mounted to the rod. The rod is adapted to move the at least one sensor box up and down through the industrial hall.

The use of the system with the rod has the benefit that a rod structure provides a more mechanically stable structure compared to, for example, a crane hook connected to a chain.

The rod structure can also use a pre-existing crane system to move through the factory hall. Using the first rail system, for example, results in a more cost efficient inspection and health monitoring system.

The at least one sensor box comprises a power supply, a data acquisition module, a data processing unit, a data storage, a data communication infrastructure and at least one sensor. Processing the data helps to reduce the communication effort by, for example, filtering, smoothing, averaging, feature detection, etc.

The sensor box is equipped with one or a variety of different sensors to gather as much information as possible about the equipment and/or environment inside the industrial hall. A sensor can be a probing device, like a temperature sensor, a humidity sensor, a pressure sensor, a distance sensor, particulate matter sensor, sensors for gases to detect electrical discharges, electric probes, magnetic probes, electromagnetic probes, etc.

The term sensor is expanded in the application to include cameras and microphones or any device that can detect signals or sense conditions. Cameras can be sensitive in the infrared region, ultraviolet region and in the region of visible light. Microphones can be sensitive to sound, ultrasound and infrasound. Microphones also include acoustic measurement and vibration monitoring.

The at least one sensor is from a list of the following sensors:
- microphone
- camera
- electric probes, magnetic probes, electromagnetic probes
- temperature sensor
- humidity sensor
- particulate matter sensor
- gas sensor
- pressure sensor
- rangefinder
- LIDAR.

This list is not exhaustive and not limited to the above mentioned sensors. With a variety of sensors different signals can be detected and premature warning is possible before extensive damage is caused in the industrial hall, or damaged equipment can be detected before it is beyond repair.

It is also possible to use more than one sensor of one type. For example, two cameras can be used simultaneously for stereoscopic vision or inspection of multiple areas.

Moreover, because of the possibility of including multiple sensors, these sensors can act redundantly, e.g. if a high temperature is sensed in equipment, infrared imaging can verify if the overheating is real, or if it is a sensor error. This has the potential to reduce false alarms from condition monitoring.

The at least one sensor box comprises X-, Y- and Z-direction distance sensors for determining the exact position of the at least one sensor box inside the industrial hall. The tracking of the sensor box enables the equipment and environment to be scanned without human interference. With the exact position of the sensor box, different areas and equipment located in the areas can be distinguished and the sensed data can be analyzed and evaluated, for example with an automatic generated report, which comprises sensed data and locations of the sensor box.

The at least one sensor box is adapted to be rotated about its yaw axis, its pitch axis and/or its roll axis. A rotatable sensor box gives the sensor box a larger field of view. For example, it is possible to rotate the sensor box around its yaw axis to scan the area in a 360° angle in the horizontal plane of the sensor box. Additionally, it is possible to rotate the sensor box around its pitch axis and/or around its roll axis to spot more difficult areas. The first rail system comprises X-, Y- and Z-direction position sensors for determining the position of the at least one sensor box inside the industrial hall. The position sensors can also be mounted on the second rail system. The position sensors mounted on the first and/or on the second rail system have the benefit that less sensors are installed on the sensor box. This helps to reduce the weight of the sensor box and leads to better energy conservation.

The first rail system extends along a predetermined path. The second rail system can also extend along a predetermined path. This has the benefit that a rail system, whose path is limited to locations which are at a safe distance from, for example, sensitive equipment or hazardous areas, prevents the sensor box from being obstructed or damaged. Nevertheless this still enables an increase in the quality of inspection and health monitoring of the equipment and environment of the industrial hall, like a valve hall.

By electrically insulating the whole system or individual parts of the system, even if the sensor box or a part of the system comes close to electrical equipment it can be saved from damage, for example due to an electric arc or a flashover.

According to a method for inspecting and condition monitoring of equipment in an industrial hall, the following steps are performed:
- moving the at least one sensor box inside the industrial hall,
- scanning the equipment and/or the environment of the industrial hall using the at least one sensor,
- acquiring data of the scanned equipment and/or environment with the data acquisition module,
- processing the acquired data with a data processing unit,
- storing of the acquired data created during scanning inside the data storage,
- transferring of the stored data with the data communication infrastructure to an analytics system.

The transferring of the stored data happens continuously and/or at defined positions. A continuous transfer of the stored data ensures that the condition of the equipment and environment of the industrial hall is monitored and immediately detected. An operator can monitor the data in real-time and decide to focus on a specific location if some anomaly is detected. Thus, malfunctions can be noticed before they become severe.

Furthermore the transfer of the stored data at defined positions enables a data transfer, for example, at a recharging station for the sensor box. Thus, the time during recharging can be used for transferring data. The transfer can also happen at locations which are safe from, for example, electromagnetic fields or other interfering signals.

For transferring the stored data at defined positions, the sensor box can be either switched on or switched off. Switched on constitutes an operating mode in which the sensor box is using its sensors. Switched off constitutes an operating mode in which the sensor box does not use its sensors.

Furthermore the transferring of the stored data happens via a wired connection and/or via a wireless connection. A wired connection can be any connection using a cable,for example, copper cables, fiber optic cables or cables made from other materials, with or without shielding. This has the benefit that interference signals have less impact on the transfer of the stored data.

A wireless connection can be any connection using radio communication. For example wireless local area network (WLAN), Bluetooth or cell phone networks. This has the benefit of avoiding the necessity of introducing cables into the industrial hall and thus saving installation costs.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.
- Figure 1: is a perspective view of an inspection and monitoring system inside an industrial hall according to an embodiment,
- Figure 2: is a perspective view of a sensor box,
- Figure 3: is another perspective view of an embodiment according to figure 1 of the mounting of the sensor box according to figure 2,
- Figure 4: is a perspective view of another embodiment of the mounting of the sensor box according to figure 2,
- Figure 5: is a perspective view of another embodiment of the mounting of the sensor box according to figure 2,
- Figure 6: is a perspective view of an exemplary mounting structure for the sensor box according to figure 2,
- Figure 7: is a perspective view of an embodiment of a rail system used in the system according to Figures 1 and 3 to 6,
- Figure 8: is a top view of the used path of the sensor box according to figure 2.

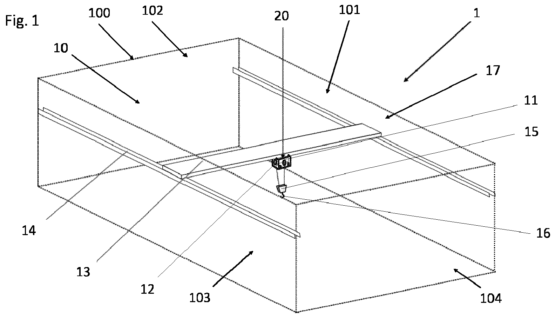

Figure 1 shows an inspection and condition monitoring system 1 comprising an industrial hall 100, for example a valve hall. The industrial hall 100 comprises, for example, four walls 101, a ceiling 102 and a floor 103 enclosing a space 104. The industrial hall 100 is delimited by at least a wall 101, but can comprise more than one wall 101 and its layout can have any shape. Various equipment 105 (not shown) can be inside the industrial hall 100. The system 1 furthermore comprises a crane system 10, which is positioned inside the factory hall 100, and a sensor box 20. The crane system 10 comprises a drive train 11, a crane trolley 12, a crane bridge 13, crane runway rails 14, a crane hook block 15 and a crane hook 16.

The crane system 10 can be already installed during commissioning or can be installed if the need for inspection and condition monitoring arises. The crane system 10 can be a temporary or a permanent fixture used for installing, for example, valves in a valve hall. In the first case, the system 1 is intended to check installation and commissioning of the valve hall. In the second case, the system 1 can additionally be used to check conditions during shutdown, maintenance, and operation, while having a restricted range of movement to respect insulation distances. In the case of a temporary crane for installation, a smaller overhead system could be installed for the sensor box 20 so that it can be used during converter maintenance or operation.

The drive train 11 moves the crane trolley 12, which is supported by the crane bridge 13. The crane bridge 13 is supported by the crane runway rails 14 and moves forward and backward in a horizontal plane inside the industrial hall 100. The crane bridge 13 and the crane runway rails 14 form a first rail system 17, which enables the crane trolley 12 to move inside the industrial hall 100 in a horizontal plane perpendicular to the movement of the crane bridge 13. The crane hook block 15 is linked to the crane trolley 12 and follows its movement. A possible linking device, for example, is a chain. Besides the chain approach, another option is to use another device to change the vertical position of the sensor box 20, for example, by a telescope-like positioning device that is not susceptible to internal rotation and oscillation.

Additionally, the crane hook block 15 is adapted to move up and down inside the industrial hall 100. Together with the first rail system 17, the crane hook block 15 is adapted to move in a three dimensional space. The crane hook 16 is in turn linked to the crane hook block 15 and follows the movement of the crane hook block 15. The sensor box 20 can be mounted anywhere on the system 1 as long as it is movable.

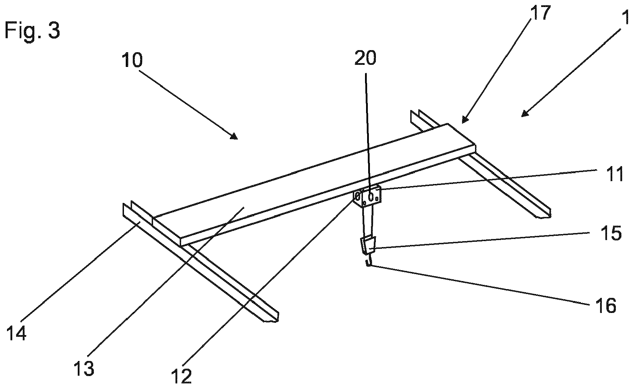

Exemplarily, the sensor box 20 in figure 1 and figure 3 is attached to the crane trolley 12, but it is not limited to the crane trolley 12.

The drive train 11 is positioned at a safe position below the ceiling 102 to mitigate interferences from, for example, electromagnetic fields. A safe position can also be an area inside the space 104 which is safe from a hazardous environment or equipment. Hazardous environment and equipment can be characterized, for example, by electromagnetic interferences, a high temperature or high radiation. Even just equipment 105 inside the industrial hall 100 can lead to damage to the system 1 or a part of the system 1, like the sensor box 20, due to a collision. A safe position can also be next to or at the wall 101, if there is sufficient distance to the equipment 105 or to defined areas. In this case, the crane system 10 takes up a position at the wall 101. The sensor box 20 can then be moved either by the crane bridge 13 along the wall 101 or it can be moved by the crane trolley 12 along the wall 101. The sensor box 20 can be moved together with the crane hook block 15 or the crane hook 16 in a two-dimensional space in a vertical plane.

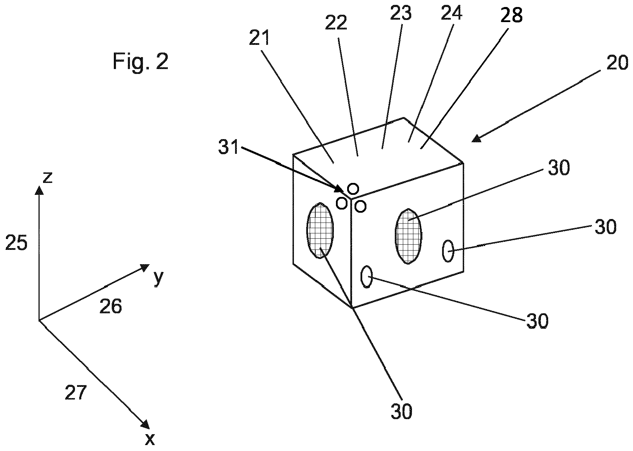

Figure 2 shows the sensor box 20 with a power supply 21, a data acquisition module 22, a data processing unit 28, a data storage 23 and a data communication infrastructure 24. The sensor box 20 comprises at least one sensor 30. In this example the sensor box 20 comprises four sensors 30, but it can have more or less than four sensors 30, and a X-, Y- and Z-direction distance sensor 31, which is optional. Different kinds of sensors are possible to sense different parameters, like temperature, particle matter, humidity, pressure, gases, electric fields, magnetic fields, electromagnetic fields, etc. A sensor can be any sensing device, like a camera or a microphone. Such a camera can detect light of any kind. Infrared, ultraviolet and visible light. The sensor box 20 can also comprise more than one camera and use it, for example, for stereoscopic vision or inspection of multiple areas simultaneously.

This list is not exhaustive and not limited to the above mentioned metrics.

When mounted, the sensor box 20 is adapted to be rotated about a yaw axis 25, a pitch axis 26 and/or a roll axis 27. This gives the sensor box 20 a larger field of view and enables the sensor box 20 to detect areas and equipment 105 (not shown in Fig.2) inside the industrial hall 100 (not shown in Fig.2), which are difficult to see otherwise.

The power supply 21 of the sensor box 20 can be a primary or secondary battery, which can be recharged. It is also possible to supply energy to the sensor box 20 with a power cable.

Figure 3 shows the system 1 comprising the crane system 10 and the sensor box 20, which is mounted to the crane trolley 12. The system 1 is basically the same as described in figure 1, but with a simplified illustration. The crane trolley 12 is moved by the drive train 11 along the crane bridge 13. The crane bridge 13 is supported by the crane runway rails 14. The crane system 10 further comprises the crane hook block 15 and the crane hook 16. Both can be used to transport equipment 105 (not shown in Fig.3) inside the industrial hall 100 (not shown in Fig.3) if necessary. This has the additional advantage that an exact position of the crane hook 16 and the transported equipment can be determined in a horizontal plane. This favours a remote control of the system 1.

If a scan of the sensor box 20 in only two dimensions is required, the crane hook block 15 and crane hook 16 can be omitted. This has the benefit that less components are necessary for the inspection and condition monitoring system 1. This results in a more cost effective system 1. Furthermore there is less risk of damaging equipment 105 (not shown in Fig.3) with the crane hook block 15 and crane hook 16 if the crane trolley 12 moves inside the industrial hall 100 (not shown in Fig.3).

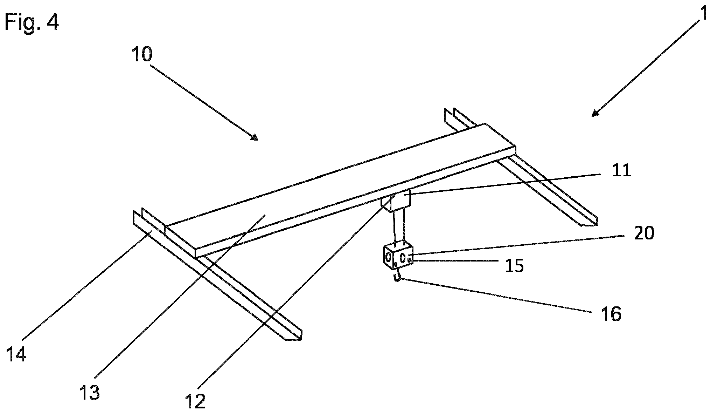

Figure 4 shows an alternative embodiment of arranging the sensor box 20 on the crane system 10. The system 1 is basically the same as described in figure 3, with the difference that the sensor box 20 is mounted to the crane hook block 15. The crane hook block 15 is adapted to be moved up and down inside the industrial hall 100 (not shown in Fig.4). Thus, the sensor box 20 is also adapted to be moved up and down by the crane hook block 15. This has the benefit that the sensor box 20 moves in three dimensions and more areas and equipment 105 (not shown in Fig.4) can be detected.

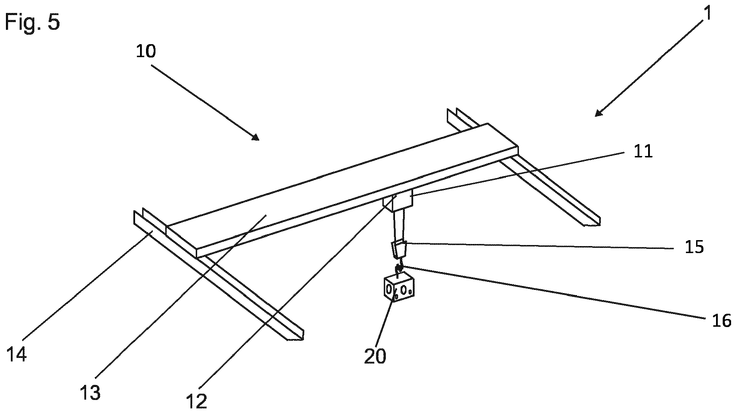

Figure 5 shows an alternative embodiment of arranging the sensor box 20 on the crane system 10. The system is basically the same as described in figure 3, with the difference that the sensor box 20 is mounted to the crane hook 16. This has the benefit that the sensor box 20 can be mounted on demand to the crane system 10 if a routine inspection is due. This also reduces cost and simplifies installation of the sensor box 20 in pre-existing crane systems 10.

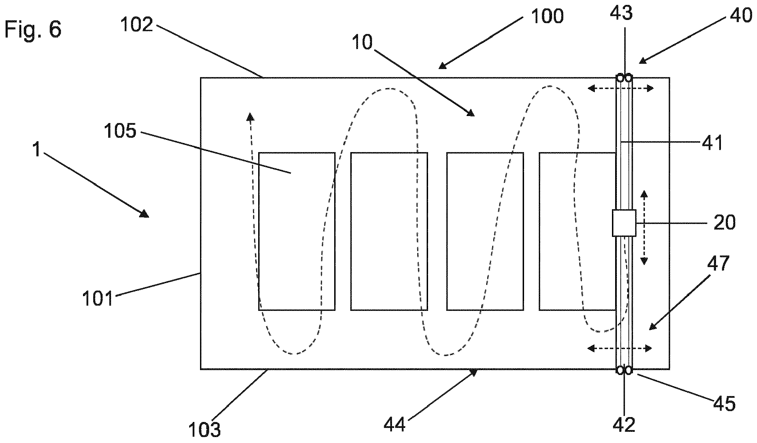

Figure 6 shows an exemplary structure of the arrangement of the sensor box 20. The system 1 comprises a rod structure 40 with a rod 41, a bottom end 42 and a top end 43. The rod 41 extends from the floor 103 of the industrial hall 100 to the ceiling 102 of the industrial hall 100. The rod structure 40 further comprises a mechanical channel 44 running along the floor 103 of the industrial hall 100. The mechanical channel 44 guides the rod 41 on its bottom end 42 with at least one wheel 45. Thus, the rod 41 is adapted to move between, for example two walls 101. The rod 41 is also adapted to move along one wall 101. But it can also move along more than one wall 101, for example, it can move along all of the four walls 101. The sensor box 20 is mounted to the rod 41 and the rod 41 is adapted to move the sensor box 20 up and down in the industrial hall 100. Therefore, the rod 41 and the mechanical channel 44 form a second rail system 47 and thus the sensor box 20 is adapted to move in a two or three dimensional space inside the industrial hall 100. The dashed lines visualize a possible trajectory of the sensor box 20.

The movement of the rod 41 can be based on the existing crane system 10 in the industrial hall 100. This has the benefit that using pre-existing the crane system 10 is more cost efficient than installing a new movable system.

For this purpose the top end 43 can be attached to the crane trolley 12 (not shown in Fig.6), to the crane bridge 13 (not shown in Fig.6) or the crane runway rails 14 (not shown in Fig.6). The rod 41 is driven, for example, by the drive train 11 (not shown in Fig.6). A different propulsion, like a mechanical drive, for example a gear drive, is also possible.

Alternatively the rod 41 can move through the industrial hall 100 without being limited to the area at the wall 101. Thus, the sensor box 20 is adapted to move in a three dimensional space.

Furthermore the rod structure 40 can also be implemented on a structure other than a pre-existing infrastructure.

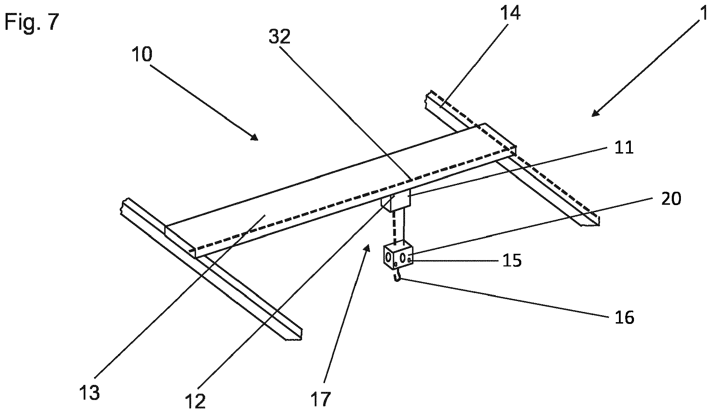

Figure 7 shows an inspection and condition monitoring system 1. The system 1 is basically the same as described in figure 4, with the difference that possible positions of X-, Y- and Z-direction position sensors 32 along the first rail system 17 are shown in dashed lines. The X-, Y- and Z-direction position sensors 32 are adapted for determining the position of the sensor box 20 inside the industrial hall 100 (not shown in Fig.7).

In this case the sensor box 20 is exemplarily mounted to the crane hook block 15. But it can also be mounted to the crane trolley 12, the crane hook 16 or on another part of the system 1.

The X-, Y- and Z-direction position sensors 32 can also be used in the second rail system 47 of the rod structure 40 (not shown in Fig.7) according to figure 6.

The benefit of the first rail system 17 and/or the second rail system 47 comprising the X-, Y- and Z-direction position sensors 32 is that less sensors are mounted on the sensor box 20. This results in a lower weight of the sensor box 20. Furthermore less space is required and the additional space can be used for different sensors 30.

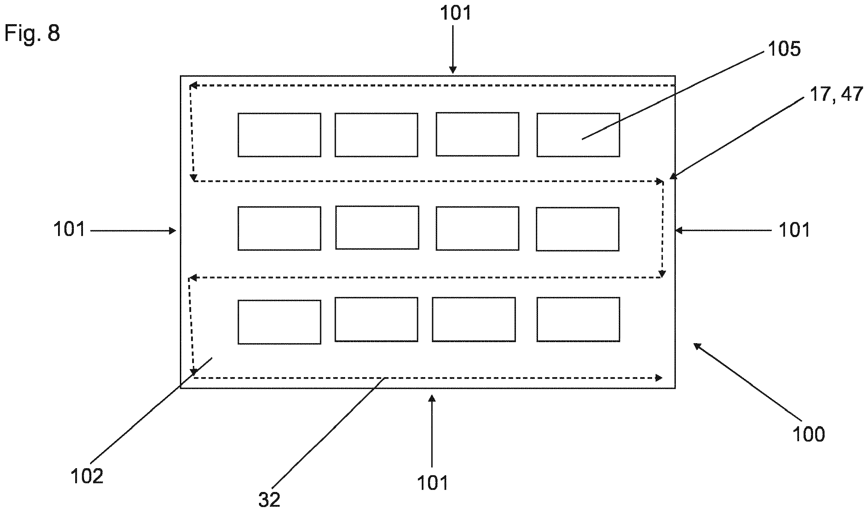

Figure 8 shows a top view of the industrial hall 100. The equipment 105 is placed between, for example, four walls 101 of the industrial hall 100. The industrial hall 100 is not limited to four walls 101. It can also comprise less or more than four walls 101. The first rail system 17 and/or the second rail system 47 extend along a predetermined path (dashed line). The predetermined path is, for example, free from equipment 105 or it is cleared from an insulation point of view. For example, there are sufficiently low interfering electric, magnetic or electro-magnetic fields. In the case of the rod structure 40, the mechanical channel 44 follows the predetermined path on the floor 102 of the industrial hall 100. X-, Y- and Z-direction position sensors 32 can be arranged along the predetermined path.

This has the benefit that the first rail system 17 and/or the second rail system 47, whose paths are limited to locations which are at safe distance from, for example, sensitive equipment or hazardous areas, prevent the sensor box 20 from obstruction or damage.

While the disclosure is amenable to various modifications and alternative forms, specifics thereof have been shown by way of example in the figures and will be described in detail. It should be understood, however, that the intention is not to limit the disclosure to the particular embodiments described. On the contrary, the intention is to cover all modifications, equivalents, and alternatives falling within the scope of the disclosure defined by the appended claims.

The embodiments shown in the Figures 1 to 8 as stated represent exemplary embodiments of the improved arrangement and method; therefore, they do not constitute a complete list of all embodiments according to the improved arrangement and method. Actual arrangements and methods may vary from the embodiments shown in terms of arrangements, devices, for example.

While some types of monitoring may not be feasible during converter operation, e.g. between valves, they can be used when the converters are de-energized, e.g. to measure equipment position and insulation distances for commissioning, or to determine humidity thresholds and airflow around fiber bundles, thereby reducing dry-out times. Additionally, monitoring from certain locations such as the ceiling 102 or wall area may be possible even during operation, without risking insulation failure, such as infrared inspection, temperature, humidity, pressure and particle density monitoring.

If the scanning procedure is performed during converter operation, the high voltage clearance distances must be respected at all times, which reduces the effective scannable three dimensional space, restricting crane movement to, for example, the ceiling 102 or wall 101, and not between valves. During a de-energized state of the converter, e.g. during installation, commissioning, or maintenance periods, the sensor box 20 can be moved as close as needed to the desired location near the valve structures. The only space restrictions are provided by e.g., busbars between the valve structure or between valves and wall bushings.

By electrically insulating the whole system 1 or individual parts of the system 1, even if the sensor box 20 or a part of the crane system 10 comes close to electrical equipment it can be saved from damage, for example due to an electric arc or a flashover.

### Reference Signs

- 1: condition monitoring system
- 10: crane system
- 11: drive train
- 12: crane trolley
- 13: crane bridge
- 14: crane runway rails
- 15: crane hook block
- 16: crane hook
- 17: first rail system
- 20: sensor box
- 21: power supply
- 22: data acquisition module
- 23: data storage
- 24: data communication infrastructure
- 25: yaw axis of the sensor box
- 26: pitch axis of the sensor box
- 27: roll axis of the sensor box
- 28: data processing unit
- 30: sensor
- 31: X-, Y- and Z-direction distance sensors
- 32: X-, Y- and Z-direction position sensors
- 40: rod structure
- 41: rod
- 42: bottom end
- 43: top end
- 44: mechanical channel
- 45: wheel
- 47: second rail system
- 50: analytics system
- 100: industrial hall
- 101: wall
- 102: ceiling
- 103: floor
- 104: enclosed space
- 105: equipment

## Claims

1. An inspection and condition monitoring system (1), comprising:
- an industrial hall (100) delimited at least by a wall (101), a ceiling (102) and a floor (103), enclosing a space (104) containing equipment (105),
- a drive train (11), which is located at a safe position below the ceiling (102) of the industrial hall (100),
- a crane trolley (12), which is moved by the drive train (11),
- a crane bridge (13), which supports the crane trolley (12),
- crane runway rails (14), adapted to support the crane bridge (13), both forming a first rail system (17) such that the crane trolley (12) can move inside the industrial hall (100), and
- at least one sensor box (20).

2. System (1) according to claim 1, wherein the at least one sensor box (20) is mounted to the crane trolley (12) traveling along the crane bridge (13).

3. System (1) according to one of the preceding claims, comprising
- a crane hook block (15), which is linked to the crane trolley (12) and which is adapted to move up and down in the industrial hall (100), wherein the at least one sensor box (20) is mounted to the crane hook block (15).

4. System (1) according to one of the preceding claims, comprising
- a crane hook (16), which is linked to the crane hook block (15), wherein the at least one sensor box (20) is attached to the crane hook (16).

5. System (1) according to one of the preceding claims,
wherein the drive train (11) is located at a safe position at the wall (101) of the industrial hall (100).

6. System (1) according to one of the preceding claims,
wherein the at least one sensor box (20) comprises
- a power supply (21),
- a data acquisition module (22),
- a data processing unit (28),
- a data storage (23)
- a data communication infrastructure (24) and
- at least one sensor (30).

7. System (1) according to claim 6, wherein the at least one sensor (30) is from a list of the following sensors (30):
- microphone
- camera
- electric probes
- magnetic probes
- electromagnetic probes
- temperature sensor
- humidity sensor
- particulate matter sensor
- gas sensor
- pressure sensor
- rangefinder
- LIDAR.

8. System (1) according to one of the preceding claims,
wherein the at least one sensor box (20) comprises X-, Y- and Z-direction distance sensors (31) for determining the exact position of the at least one sensor box (20) inside the industrial hall (100).

9. System (1) according to one of the preceding claims,
wherein the at least one sensor box (20) is adapted to be rotated about its yaw axis (25), its pitch axis (26) and/or its roll axis (27).

10. System (1) according to one of the preceding claims,
wherein the first rail system (17) comprises X-, Y- and Z-direction position sensors (32) for determining the position of the at least one sensor box (20) inside the industrial hall (100).

11. System (1) according to one of the preceding claims,
wherein the first rail system (17) extends along a predetermined path.

12. System (1) according to one of the preceding claims,
wherein the system (1) is electrically insulated.

13. A method for inspecting and condition monitoring of equipment (105) in an industrial hall (100), comprising the following steps:
- moving the at least one sensor box (20) inside the industrial hall (100),
- scanning the equipment (105) and/or the environment of the industrial hall (100) using the at least one sensor (30),
- acquiring data of the scanned equipment (105) and/or environment with the data acquisition module (22),
- processing the acquired data with a data processing unit (28),
- storing of the processed data created during scanning inside the data storage (23),
- transferring of the stored data with the data communication infrastructure (24) to an analytics system (50) .

14. Method according to claim 13, wherein the transferring of the stored data happens
- continuously and/or
- at defined positions.

15. Method according to claim 14, wherein transferring of the stored data happens
- via a wired connection and/or
- via a wireless connection.
